# EUROPEAN PATENT SPECIFICATION

(11) **EP 1 132 352 B1**
(45) Date of publication and mention of the grant of the patent: **28.04.2004**
(21) Application number: 01103165.5
(22) Date of filing: 14.07.1999
(51) Int. Cl.: C03C 25/00, G02B 6/00

(54) **Optical fiber apparatus and manufacturing method therefor**
Faseroptische Vorrichtung, und Herstellungsverfahren dafür
Dispositif de fibre optique et sa méthode de production

(30) Priority: 15.07.1998 JP 20056598; 28.04.1999 JP 12188999; 10.05.1999 JP 12864799
(43) Date of publication of application: 12.09.2001
(62) Divisional of application: 99113758.9
(73) Proprietor: Kitagawa Industries Co., Ltd., Nagoya-shi 460-0012 (JP); Toyota School Foundation, Nagoya-shi 468-8511 (JP)
(72) Inventor: Ikushima, Akira, Nagoya-shi, 468-0076 (JP); Saito, Kazuya, Shimada, Tenpaku-cho, Nagoya-shi, 468 (JP); Kotani, Takayuki, Tenpaku-ku, Nagoya-shi, 468-0008 (JP); Nasuda, Shogo, Inazawa-shi, Aichi-ken, 492-8137 (JP)
(74) Representative: Vetter, Hans, Dipl.-Phys. Dr.

(56) References cited:
- EP-A- 0 687 924
- US-A- 3 732 425
- US-A- 4 979 796

## Description

### BACKGROUND OF THE INVENTION

### (i) Field of The Invention

The present invention relates to an optical fiber apparatus resistant to UV and radioactive rays. It also relates to a manufacturing method for an optical fiber apparatus resistant to UV irradiation and radioactive ray irradiation.

### (ii) Description of the Related Art

Recently, optical elements made of silica glass ( for example, a light wave-guiding element like an optical fiber and a light-induced Bragg gratings, a lens, a light modulator, a light polarizer, a light guide made of optical fibers and a photomask ) have been demanded to be used for UV transmission.

Especially, in the case of a photomask for excimer laser lithography, a light guide for transmitting UV used to irirradiate UV-hardening resin, and optical fiber and a light guide for transmitting UV ( especially, excimer laser beam) used in the fields of fine processing, medical treatment and the like, UV with a shorter wave length and a higher power is demanded to be transmitted. For example, when the UV with a short wave length and high power is used for irirradiating a UV hardening resin, the hardening time of the resin can be reduced . The peculiarity of short wave length and high power of the UV can thus be fully availed.

Nevertheless, when UV is transmitted in silica glass, there occurs a problem that structual defects are formed in the silica glass, which decrease the transmittance. The decrease of transmittance of silica glass becomes more remarkable, as the wave length becomes shorter and the light power becomes higher. Therefore, when an excimer laser beam is used, the transmittance of silica glass becomes worse in the order from KrF excimer laser ( wave length : 248nm ) to ArF excimer laser (wave length : 193nm ) to F₂ excimer laser ( wave length : 157nm ). The transmittance becomes worse when a laser of higher light power ( one of various excimer laser like KrF, ArF and F₂ ) is used than when a lamp of lower light power ( a halogen lamp, a deuterium discharge lamp and the like ) is used.

In order to suppress the decrease of transmittance of silica glass due to UV, or to improve resistance of silica glass to UV, a technique of increasing hydroxyl group content of silica glass was proposed in Japan Patent Laid-open Hei 4-342427, Hei 4-342436 and so on.

However, when the hydroxyl group content becomes higher, the wave length of UV absorption edge becomes longer, with a consequence that UV of short wave length ( especially, vacuum ultraviolet zone ) can not be transmitted.

According to the European Patent Application EP 0 687 924 A 1 a single silica fiber lightguide is heated in a temperature range of 200°C to 400°C by infrared absorption or electrical resistance heating. This recovery process is directed to an improved transmission of UV light. The US patent 4,979,796 describes heating of a single optical fibre at a predetermined temperature. To this end a cylindrical heating film and a cladding is disposed about the core of the fibre. The US patent 3,732,425 also concerns resistance heating of a single optical fibre by means of a cladding.

### DISCLOSURE OF THE INVENTION

It is an object of the invention to provide an UV resistant optical fiber apparatus in which decrease of transmittance due to UV irirradiation can be suppressed without lengthening the wave length of UV absorption edge.

To attain this object, an optical fiber apparatus comprising optical fibers made of silica glass, heating means for heating said optical fibers is proposed. The optical fibers form an optical fiber bundle. The heating means are being applied to said optical fiber bundle.

Furthermore, a manufacturing method of an optical fiber apparatus resistant to ultraviolet rays and radioactive rays with the steps of preparing an optical fiber bundle, winding a heat body around an outer surface of the optical fiber bundle and connecting each lead wire to the heater is proposed.

Furthermore, which is not part of the invention, silica glass resistant to UV and radioactive rays is proposed which has been heat-treated after UV irirradiation to the silica glass or whose heat treatment and UV irradiation have been carried out at the same time. An optical element resistant to UV and radioactive rays can be made of the silica glass.

Accordingly, by forming many structural defects intentionally in silica glass by means of UV irradiation, and subsequently removing the structural defects by means of heat treatment, the average bond angle of Si-O-Si network in the silica glass is increased compared with that before the heat treatment. As a result, structural relaxation proceeds to give structurally stable glass and defects due to UV irirradiation and radioactive ray irradiation are prevented from being formed. Therefore, the wave length of UV absorption edge does not become long, since the resistance to UV and radioactive rays are improved not by increasing hydroxyl group content.

### BRIEF DESCRIPTION OF DRAWINGS

Fig. 1 is a characteristic graph showing experiment results.
Fig.2A is a front view of a light guide according to the present invention, and Figs. 2B, 2C and 2D are front views showing disassembled states of
Fig.3A is a cross sectional view of the light guide of Fig.2A taken along the line IIIA-IIIA, and Fig.3B is a side view of the light guide;
Fig.4A is a front view of a light guide according to the present invention, and Fig.4B is a front view showing a disassembled state of the light guide according to Fig. 4A;
Fig.5A is a cross sectional view of the light guide of Fig.4A taken along the line VA-VA, and Fig.5B is a side view of the light guide according to Fig. 4A; and
Fig. 6 is an enlarged perspective view of an optical fiber bundle of the light guide according to the invention.

### DETAILED DESCRIPTION OF THE PREFERRED EMBODIMENTS

Preferred embodiments will be described with reference to the accompanying drawings.

Silica glass whose resistance to UV and radioactive rays can be improved without lengthening the wave length of UV absorption edge is obtained by heat-treating pure silica glass after UV irradiation.

First, the following Samples A-C made of bulk of pure silica glass were prepared.

Sample A : pure silica glass heat-treated ( at 1200 °C for 15 hours in an electric furnace ) after UV irradiation treatment ( 100 thousand shots ) to the glass.

Sample B : pure silica glass heat-treated only ( at 1200 ° C for 15 hours in an electric furnace ).

Sample C : pure silica glass which was not irradiated with UV, nor was heat-treated.

Each of Samples A-C was irradiated with ArF excimer laser irradiation intensity : 15mJ/c m² ) and the degree of decrease of UV transmittance ( wave length : 200nm ) with respect to the shot number was measured.

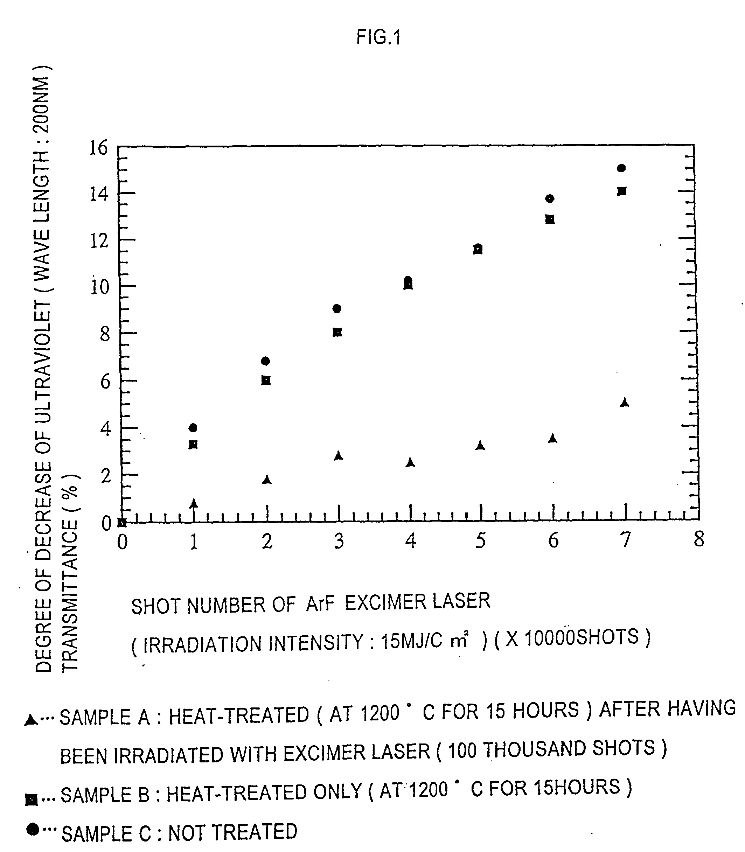

Fig.1 shows that the transmittance for each of Samples B and C remarkably decreases as the irradiation shot number of ArF excimer laser increases, while that for Sample A does not practically decrease with the increase of irradiation shot number.

First, an UV irradiation treatment is carried out to form structural defects intentionally in the silica glass and then the structural defects are removed by subsequent heat treatment, which causes increase of the average bond angle of Si-O-Si network in the silica glass, compared with that before the heat treatment. As a result, structural relaxation proceeds to give structurally stable glass and defects due to UV irradiation are prevented from being formed. Consequently, Sample A is given such high UV resistance.

Therefore, since the UV resistance is improved not by increasing hydroxyl groups in silica glass of Sample A, the wave length of absorption edge does not become longer and UV of short wave length up to vacuum UV zone can be transmitted.

When UV resistance of silica glass is improved, resistance to radioactive rays is also improved. Therefore, Sample A which has an excellent UV resistance has also an excellent radioactive ray resistance.

The initial transmittance ( the UV transmittance before irradiation of excimer laser ) for Sample A was also confirmed to be improved compared with that for each of Samples B and C.

The variation of the aforementioned bond angle can be confirmed by analyzing the peak position of infrared absorption near 2260cm⁻¹ in the infrared absorption measurement. Specifically, as the structural relaxation proceeds ( as the resistance to UV and radioactive rays increases ), the peak position of infrared absorption near 2260cm⁻¹ in the infrared absorption measurement is shifted to higher frequency side (shorter wave length side ) within the range from ca.2255cm⁻¹ to ca.2275cm⁻¹. Sample A can be easily distinguished among samples A, B and C, by analyzing the peak position of infrared absorption near 2260cm⁻¹ in the infrared absorption measurement.

Concerning the UV irradiation treatment and heat treatment of bulk silica glass, the following conditions and features are given.

Wave length of UV for irradiation is preferably in the range from 50nm to 300nm, more preferably from 130nm to 250nm and further preferably from 150nm to 200nm. When the wave length becomes longer than that in the range, the effect of improvement of resistance to UV and radioactive rays tends to be lowered. When it becomes shorter, the effect of improvement of resistance to UV and radioactive rays tends to be saturated.

Intensity of UV for irradiation is preferably in the range from 0.01mJ/c m² to 1000mJ/c m², more preferably from 1mJ/c m² to 500mJ/c m² and further preferably from 10mJ/c m² to 300mJ/c m². When the intensity becomes stronger than that in the range, deterioration of silica glass tends to become higher. When it becomes weaker, the effect of improvement of resistance to UV and radioactive rays tends to be lowered.

As for UV irradiation time, irradiation should be continued at least until decrease of UV transmittance is confirmed. When the irradiation is continued until the decrease of transmittance is saturated, a surer effect of improvement of resistance to UV and radioactive ray can be obtained.

Temperature of heat treatment in an electric furnace is preferably in the range from 100 ° C to 1600 °C, more preferably from 200 ° C to 1400 ° C and further preferably from 300 ° C to 1300 ° C. When the temperature is out of the range, the effect of improvement of resistance to UV and radioactive rays tends to be lowered. When the heat treatment is carried out, any method of heat treatment may be used such as a method where light of infrared lamp is irradiated ( lamp anneal method ) and a method where infrared laser beam is irradiated ( laser anneal method ), other than a method using an electric furnace. However, irrespective of the heat treatment method, aforementioned condition of temperature should be fulfilled.

The following modifications and variations can be embodied as the followings.
(1) Although heat treatment of silica glass was carried out after its UV irradiation treatment in aforementioned embodiment, both treatments may be carried out at the same time.
(2) The embodiment can be applied to an optical fiber made of silica glass. In this case, UV irradiation treatment and heat treatment may be carried out after the optical fiber has been melt-spun from the silica glass, as well as during the melt spinning process.

In these cases, similarly to aforementioned (1), heat treatment may be carried out after UV irradiation treatment, or the UV irradiation treatment and the heat treatment may be carried out at the same time.

The conditions and features of UV irradiation treatment and heat treatment for the optical fiber is the same to those for aforementioned bulk silica glass.

In the UV irradiation treatment of the optical fiber, although the same effect as that in aforementioned case is attained even when the treatment is carried out from the end side of the optical fiber, a higher efficiency of UV irradiation treatment can be attained by carrying out the UV irradiation from the lateral side of the optical fiber without covering the optical fiber, when the total length of the optical fiber is long.

In the heat treatment of the optical fiber, the heat treatment temperature is preferably in the range from 100 ° C to 1600 ° C, more preferably from 200 ° C to 1400 ° C and further preferably from 300 ° C to 800 ° C. When the heat treatment temperature is out of the range, the effect of improvement of resistance to UV and radioactive rays tends to be lowered. The heat treatment method for the optical fiber may be of any type, as it is in case of bulk silica glass.

In the case of the optical fiber, the upper limit of the further preferable heat treatment temperature is desirably set at 800 ° C, which is lower by 500 ° C from 1300 ° C. 1300 ° C is the upper limit of the further preferable heat treatment temperature for bulk silica glass. It is because in the case of the optical fiber, additives added for giving difference of refractive index between the core and the clad diffuse when the heat treatment temperature is too high and deterioration of transmittance occurs as a result.

(3) The embodiment can be applied to various optical elements for UV made of silica glass ( for example, a wave-guiding channel like a light-induced Bragg gratings, a lens, a light modulator, a light polarizer, a light guide using optical fibers, a photomask and the like ).

In these cases, as well as in aforementioned (1), the optical element may be made of silica glass heat-treated after having been irradiated with UV, or the optical element may be irradiated with UV after having been formed.

Especially, in the case of a photomask for excimer laser lithography, a light guide for transmitting UV used to irradiate a UV-hardening resin, and an optical fiber and a light guide for transmitting UV ( especially, excimer laser beam ) used in the fields of fine processing, medical treatment and the like, UV with a shorter wave length and a higher power is demanded to be transmitted. For example, when the embodiment is applied to a light guide for transmitting UV for irradiation to UV hardening resin, the hardening time of the resin can be reduced by the shortening of wave length of UV and the increase of light power of UV. The peculiarity of short wave length and high power of UV can thus be fully available.

(4) At least either of the UV irradiation treatment and the heat treatment is carried out in the atmosphere of hydrogen. Silica glass which is structurally more stable can occasionally obtained by such a treatment. In that case, the resistance of silica glass to UV and radioactive rays can be further improved. However, hydroxyl groups in silica glass are occasionally increased by the treatment, which causes lengthening of the wave length of absorption edge. In such a case, the hydroxyl group content should be adjusted so that the UV with the actually used wave length can be transmitted.

(5) The embodiment may be applied not only to pure silica glass but also to silica glass containing hydroxyl groups and other additives. Generally, when impurities are added to pure silica glass, its resistance to UV and radioactive rays is improved, while the wave length of UV absorption edge becomes longer. Therefore, the kinds and contents of impurities should be optimized according to the wave length of UV used for the optical element.

A light guide according to the invention will be described.

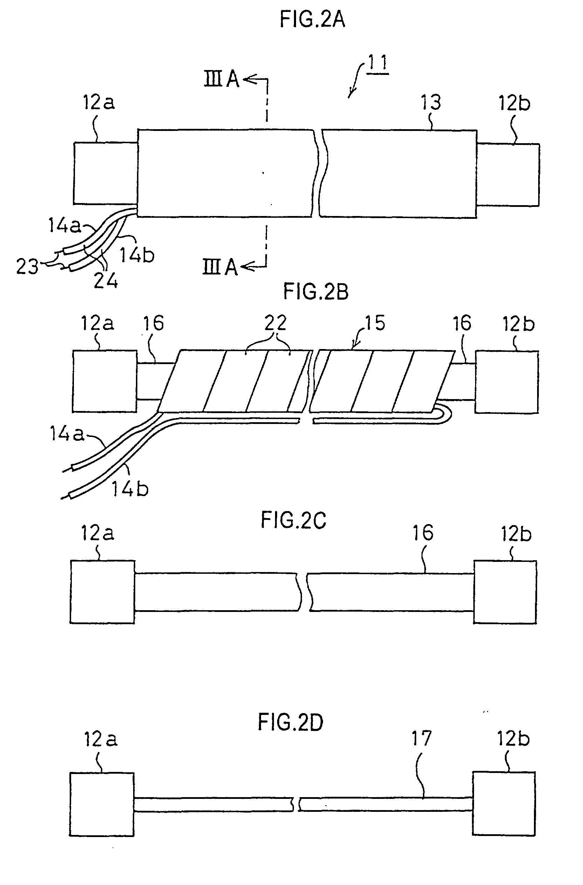

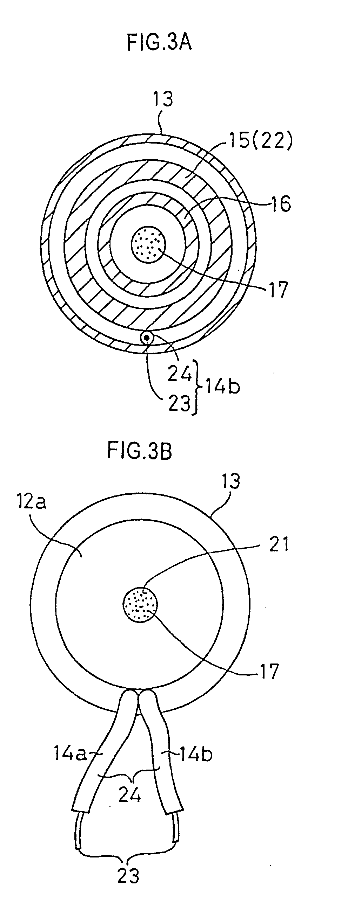

Referring to Figs.2A-2D and Figs.3A and 3B, the light guide 11 comprises fixers 12a and 12b, an outer protection tube 13, lead wires 14a and 14b, a heater 15, a fiber bundle protection tube 16 and an optical fiber bundle 17.

Fig.2A is a front view of a light guide 11. Fig.2B shows a state where the outer protection tube 13 is removed from the light guide 11 in Fig.2A. Fig.2C shows a state where the heater 15 is further removed from the light guide 11 in the state of Fig.2B. Fig.2D shows a state where the fiber bundle protection tube 16 is further removed from the light guide 11 in the state of Fig.2C.

The optical fiber bundle 17 is formed from many optical fibers made of silica glass, which are bundled so as to form a column.

Any known method for making optical fibers may be used to make the optical fiber. For example, a cylindrical glass pre-form of silica glass is formed first, and then an optical fiber is spun out of the pre-form.

As silica glass for making the glass fiber, pure silica glass that does not contain impurities or silica glass containing hydroxyl groups or other additives may be used. Generally, when impurities are added to pure silica glass, its resistance to UV is improved, while the wave length of UV absorption edge becomes longer. Therefore, the kinds and contents of impurities should be optimized according to the wave length of UV which is to be transmitted.

The optical fiber bundle 17 with long length is provided with the fixers 12a and 12b at its both ends. Each of the fixers 12a and 12b is of a hollow cylindrical form, into whose central hole 21 the optical fiber bundle 17 is inserted.

Any material can be used for the fixers 12a and 12b, if it has sufficient strength for surely supporting the optical fiber bundle 17 and sufficient heat resistance for enduring the heat treatment with the heater 15 mentioned hereinafter. For example, various metals ( aluminium, copper, brass, stainless steel and so on ) and various heat resistant plastics can be used.

The optical fiber bundle 17 extending from each of the fixers 12a and 12b is inserted into the fiber bundle protection tube 16 with an inner diameter slightly larger than the outer diameter of the optical fiber bundle 17. There occurs no problem even if a part of the optical fiber bundle 17 is contacted with the inner wall of the fiber bundle protection tube 16 when the optical fiber bundle 17 is bent in the fiber bundle protection tube 16.

Any material can be used for the fiber protection tube 16, if it satisfies the demanded conditions ( ① It surely protects the optical fiber bundle 17 during manufacturing of a light guide 11, mentioned hereinafter. ② It has sufficient heat resistance for enduring the heat treatment by the heater 15, mentioned hereinafter, and has excellent heat conductivity. ③ It has such excellent flexibility that it does not hinder bending of the light guide 11. ). For example, a flexible tube made of any of various metals ( aluminium, copper, brass, stainless steel and the like ) and various heat resistant plastics may be used.

The fiber bundle protection tube 16 is inserted into the hollow cylindrical heater 15 with an inner diameter slightly larger than the outer diameter of the fiber bundle protection tube 16. The heater 15 is formed by spirally winding a ribbon-like heat body 22 covered with an insulating material, and has good flexibility. As a result, the outer periphery of the optical fiber bundle 17 is covered with the heater 15 having the heat body 22 via the fiber bundle protection tube 16.

Any material can be used for the heat body 22 if it has strength necessary for forming the heater 15 and can generate heat necessary for the heat treatment mentioned hereinafter. For example, metals ( nichrome, Fe-Cr-Al alloy ,etc. ), ceramics ( silicon carbide ,etc.), conductive plastics and the like may be used.

The lead wires 14a and 14b are electrically connected to both ends of the ribbon-like heat body 22, respectively. Each of the lead wires 14a and 14b has a conductive core wire 23 and an insulating cover material 24.

The heater 15 and each of the lead wires 14a and 14b are inserted into the cylindrical outer protection tube 13 with an inner diameter slightly larger than the outer diameter of the heater 15. Both ends of the outer protection tube 13 are connected to the fixers 12a and 12b, respectively, and both lead wires 14a and 14b are pulled out from the end of the outer protection tube 13 on the side of the fixer 12a. Specifically, the lead wire 14b connected to the heat body 22 on the side of the fixer 12b is inserted into the gap between the heater 15 and the outer protection tube 13 and pulled out from the end thereof on side of the fixer 12a with the lead wire 14a. The insulating cover material 24 has been removed from the ends of the pulled out lead wires 14a and 14b and the core wires 23 are exposed. The connecting parts of the outer protection tube 13 and the fixers 12a and 12b are sealed. The connecting parts of the lead wires 14a and 14b and outer protection tube 13 are also sealed.

Any material can be used for the outer protection tube 13 if it satisfies demanded conditions ( ① It surely protects the heater 15. ② It has heat resistance for enduring the heat treatment by the heater 15, mentioned hereinafter. ③ It has good flexibility with which bending of the light guide 11 is not prevented. ). For example, a flexible tube made of one of various metals ( aluminium, copper, brass, stainless steel and the like )and various heat resistant plastics may be used.

Since each of parts 13, 14a, 14b, 15, 16 and 17 has thus excellent flexibility, the light guide 11 is gifted with a sufficient bending property. Moreover, since the fixers 12a and 12b are secured at both ends of the optical fiber bundle 17, which is protected by a triple layered structure composed of the fiber bundle protection tube 16, the heater 15 and the outer protection tube 13, the optical fiber bundle 17 is surely prevented from being influenced by vibrations and shocks inflicted from the outside of the light guide 11. In addition, since the connecting parts between the outer protection tube 13 and the fixers 12a and 12b are sealed and therefore the heater 15 is not exposed to the outside atmosphere, the life of the heater 15 can be prolonged.

A manufacturing method of the light guide 11 constituted as aforementioned will be described as follows.

First, the heater 15 is formed by winding the heat body 22 around the outer surface of the fiber bundle protection tube 16. Then, each of the lead wire 14a and 14b is connected to the heater 15 and the optical fiber bundle 17 is inserted into the fiber bundle protection tube 16 on which the heater 15 is secured. Subsequently, they are inserted into the outer protection tube 13 and the fixers 12a and 12b are secured to both ends of the optical fiber bundle 17. The light guide 11 is finally completed by sealing aforementioned connecting parts.

The light guide 11 can be manufactured simply and easily in such a way. Since the heater 15 is not directly wound around the optical fiber bundle 17 but the fiber bundle protection tube 16 is provided between them, it becomes possible to protect the optical fiber bundle 17 when the heater 15 is formed, and the optical fiber bundle 17 can be prevented from being hurt.

Subsequently, methods for using the light guide 11 will be described.

### ( Using Method 1 )

Each of the lead wires 14a and 14b is connected to the electric current regulator ( not shown ), an electric current is conducted to the heater 15 via the lead wires 14a and 14b and the temperature of the heater 15 is increased to a predetermined temperature by controlling the current condition. The optical fiber bundle 17 is heated to a predetermined temperature by the heater 15 via the fiber bundle protection tube 16 having good heat conductivity. In this time, the outer surface of the cylindrical fiber bundle protection tube 16 is heated uniformly by the cylindrical heater 15, and the outer surface of the optical fiber bundle 17 is heated uniformly by the heat from the inner surface of the fiber bundle protection tube 16. As a result, the whole optical fiber bundle 17 is heated uniformly.

Then, the light guide 11 is used for transmitting UV, while the optical fiber bundle 17 is heated. That is, the optical fiber bundle 17 is always heated with the heater 15, while the light guide 11 is in use.

As aforementioned, when UV is transmitted in optical fibers made of silica glass, the transmittance of UV is decreased by the formation of structural defects in the silica glass. However, by transmitting UV in optical fibers while they are heated, structural defects formed in silica glass are removed, with the average bond angle of Si-O-Si in silica glass widened. As a result, structural relaxation proceeds, causing stabilization of the structure of silica glass, and the formation of structural defects due to UV transmission is suppressed. Therefore, the optical fiber bundle 17 has transmittance prevented from being decreased due to UV transmission and is gifted with excellent UV resistance.

In the case of the optical fiber bundle 17, its resistance to UV is improved not by increasing the hydroxyl group content of silica glass. Therefore, the wave length of UV absorption edge is not lengthened and UV with wave length as short as that in vacuum UV zone can be transmitted.

The variation of aforementioned bond angle can be confirmed by analyzing the peak position of infrared absorption near 2260cm⁻¹ in the infrared absorption measurement. Specifically, as the structural relaxation proceeds ( as the resistance to UV increases ), the peak position of infrared absorption near 2260cm⁻¹ in the infrared absorption measurement is shifted to higher frequency side (shorter wave length side ) within the range from ca.2255cm⁻¹ to ca.2275cm⁻¹. Therefore, the optical fiber bundle 17 of the embodiment or the optical fiber constituting the same can be easily discriminated among many optical fiber bundles or optical fibers, by analyzing the peak position of infrared absorption near 2260cm⁻¹ in the infrared absorption measurement.

In the heat treatment of the optical fiber bundle 17 by the heater 15, heating temperature is preferably in the range from room temperature to 1600 ° C, more preferably from 200 ° C to 1400 ° C and further preferably from 300 ° C to 600 ° C. When the heating temperature is out of the range, the improving effect of UV resistance tends to be lowered. When the heat treatment is carried out at too high temperature, additives added for giving difference of refractive index between the core and the clad of the optical fiber diffuse and decrease of transmittance occurs. Therefore, the upper limit of the desirable heat treating temperature is set at 600 ° C.

As aforementioned light sources, various lasers and lamps are used. As aforementioned, the decrease of transmittance of silica glass becomes more remarkable as the wave length of UV to be transmitted becomes shorter and the light power of the UV becomes higher. However, not only lamps of small power ( a halogen lamp, a deuterium discharge lamp and the like ) but lasers of high power can be used as light sources for the light guide 11 of the embodiment, since the decrease of transmittance due to UV transmission is suppressed. Further, not only KrF excimer laser ( wave length : 248nm ) but also excimer laser with shorter wave length like ArF excimer laser ( wave length : 193nm ) and F₂ excimer laser (wave length : 157nm ) can be used as light sources.

As described above in detail, according to the light guide 11 of the embodiment, since the decrease of transmittance due to UV transmission is suppressed without lengthening the wave length of absorption edge, UV with short wave length and high power can be transmitted. Especially when of the embodiment is applied to a light guide for transmitting UV used to irradiate UV-hardening resin and a light guide for transmitting UV ( especially, excimer laser beam ) used in the fields of fine processing, medical treatment and the like, the demand is fulfilled by making full use of aforementioned effect. For example, when the embodiment is applied to a light guide for transmitting UV for irradiating UV hardening resins, the hardening time of the resin can be reduced by the shortening of wave length of UV and the increase of light power of UV. The peculiarity of short wave length and high power of UV can thus be fully available.

### ( Using Method 2 )

In Using Method 2, the UV transmittance of the optical fiber bundle 17 is measured periodically. When the transmittance is confirmed to have become equal to or less than a predetermined value, each of the lead wire 14a and 14b is connected to an electric current regulator ( not shown ), an electric current is conducted to the heater 15 via the lead wires 14a and 14b and the optical fiber bundle 17 is heated to a predetermined temperature with the heater 15 by controlling the condition of the conducted current.

As a result of the heat treatment by the heater 15, structural defects in silica glass due to UV transmission are removed, with improvement of UV transmittance of the optical fiber bundle 17 being made.

After the heat treatment has been finished, each of the lead wires 14a and 14b is removed from the electric current regulator and the light guide 11 is used again as a light guide for transmitting UV.

As aforementioned, in Using Method 1, since the optical fiber bundle 17 is always heated with the heater 15 while the lighting guide is in use, formation of structural defects in silica glass due to UV transmission and removal of the structural defects by heat treatment are performed at the same time.

Contrary to the case, in Using Method 2, the optical fiber bundle 17 is not always heated while the light guide 11 is in use, but is heated only when the UV transmittance of the optical fiber bundle 17 has decreased to a predetermined value or less. Therefore, the structural defects are removed by a heating treatment after many structural defects have been formed in silica glass due to UV transmission.

Consequently, the structural defects can be more surely removed and a greater effect is attained in Using Method 1 than in Using Method 2.

However, since an electric current is always conducted in the heater 15 in Using Method 1, the consumption of electricity becomes higher than in Using Method 2. Therefore, either of Using Methods 1 and 2 may be chosen, considering the levels of the improvement of UV transmittance and the electricity consumption.

The degree of decrease of UV transmittance in the optical fiber bundle 17 corresponds to the total time during which it is used for transmitting UV. Therefore, in Using Method 2 instead of the total time during which the light guide 11 is used for transmitting UV may be measured, the transmittance being measured periodically. When the total time reaches a predetermined time, it is preferable to heat the optical fiber bundle 17.

A light guide of a further embodiment of the invention will be described.

In the description of the further embodiment, the same notations are used for the same constituent parts as in the previous embodiment and detailed explanation of the parts are omitted.

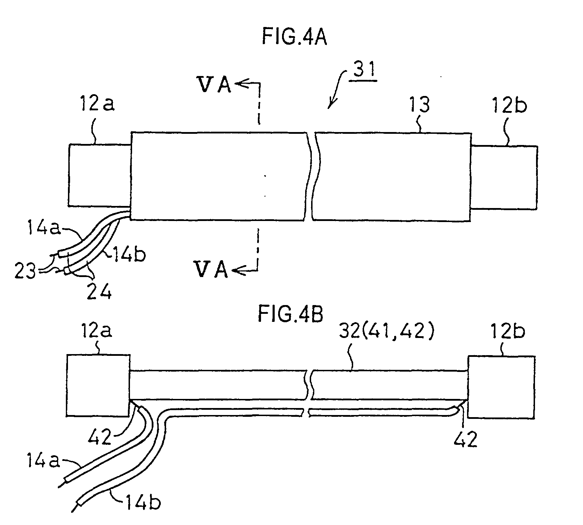

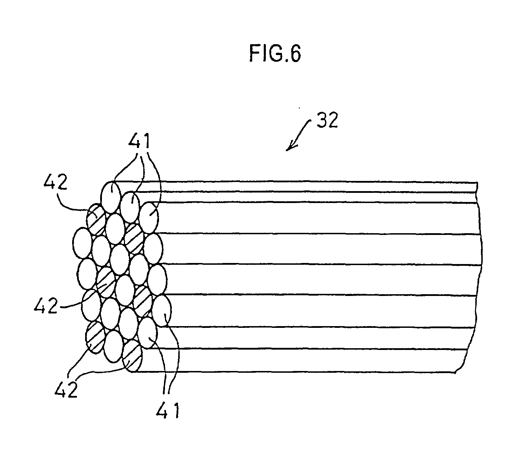

Referring to Figs.4A and 4B, Figs.5A and 5B and Fig.6, the light guide 31 comprises fixers 12a and 12b, outer protection tube 13, lead wires 14a and 14b, and an optical fiber bundle 32.

In the light guide 31 of the present embodiment, following features differ from the previous embodiment.
[1] The fiber bundle protection tube 16 and the heater 15 are not provided.
[2] The optical fiber bundle 17 is replaced by an optical fiber bundle 32.

In the optical fiber bundle 32, a large number of heat wires 42 made of a heat body are arranged in parallel to a large number of optical fibers 41 made of silica glass. They are bundled together to form totally a column-like bundle. Each of the optical fibers 41 is arranged almost uniformly, relative to each of the heat wires 42.

Any material may be used for the heat body constituting heat wires 42, only if it has such good flexibility that the light guide 31 is not prevented from being bent and has heating ability necessary for the heat treatment. For example, metals ( nichrome, a Fe-Cr-Al alloy, etc. ), ceramics ( silicon carbide, etc. ), conductive plastics and the like may be used.

As shown in Fig.4B, the heat wires 42 are pulled out together from the optical fiber bundle 32 near both ends of the optical fiber bundle 32 and each of both ends of the heat wires 42 is connected electrically to the lead wires 14a and 14b. Therefore, the end parts of the optical fiber bundle 32 which are inserted into central holes 21 of the fixers 12a and 12b are composed of the optical fibers 41 only, and the heat wires 42 are not contained in the end parts.

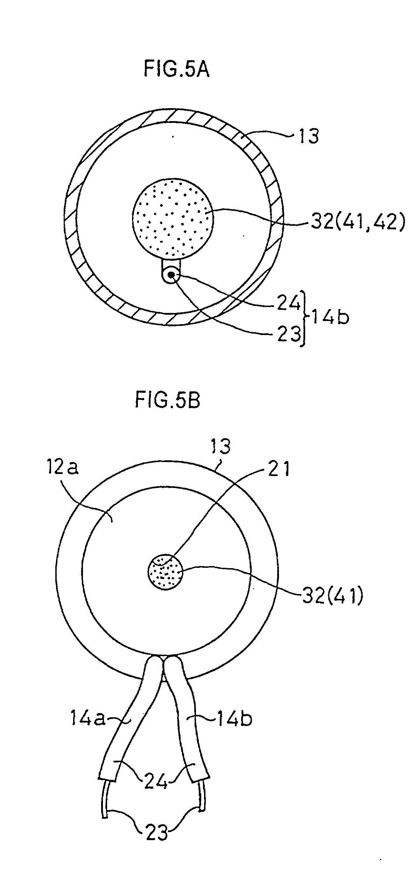

The optical fiber bundle 32 and the lead wires 14a and 14b are inserted into the cylindrical outer protection tube 13 having an inside diameter larger than the outside diameter of the optical fiber bundle 32. Therefore, as shown in Figs. 4A and 5B, the outside view of the light guide 31 of the third embodiment becomes similar to that of the light guide 11 of the second embodiment.

Each part of 13, 14a, 14b and 32 has good flexibility, as mentioned above. Therefore, the light guide 31 has also good flexibility. Moreover, each of the fixers 12a and 12b is secured to each of the end parts of the optical fiber bundle 32, and the optical fiber bundle 32 is protected by the outer protection tube 13. As a result, the optical fiber bundle 32 is surely prevented from being influenced by vibrations and shocks inflicted from outside of the light guide 31. Also, since the connecting parts of the outer protection tube 13 and each of the fixers 12a and 12b are sealed and therefore the heat wires 42 are not exposed to the outside atmosphere, the life of the heat wires 42 can be prolonged.

A manufacturing method of the light guide 31 constituted as aforementioned will be described as follows.

First, the heat wires 42 are pulled out together from the optical fiber bundle 32 near both ends of it. Each of both ends of the heat wires 42 is connected to each of the lead wires 14a and 14b. Then, the optical fiber bundle 32 and the lead wires 14a and 14b are inserted into the outer protection tube 13, and the fixers 12a and 12b are secured to both ends of the optical fiber bundle 32. The light guide 31 is completed by sealing aforementioned connecting parts. In such a way, the light guide 31 can be manufactured simply and easily.

The using methods of the light guide 31 of the third embodiment are the same as Using Methods 1 and 2 of the light guide 11 of the second embodiment.

Specifically, each of the lead wires 14a and 14b is connected to an electric current regulator ( not shown ). Then, the heat wires 42 are heated to a predetermined temperature by conducting an electric current to the heat wires 42 via the lead wires 14a and 14b and controlling the condition of the current. Each optical fiber 41 is heated to a predetermined temperature with each heat wire 42. In this case, since each of the optical fibers 41 is arranged almost uniformly, relative to each of the heat wires 42, the whole of the optical fiber bundle 32 is heated uniformly and, as a result, each optical fiber 41 is heated uniformly.

Therefore, for the light guide 31 the same effect is obtained as that for the light guide 11.

The light guide of the embodiments can be modified as the followings.

(1) In the light guide 11 a heat resistant inorganic insulating material ( magnesia, for example ) is filled in the spaces between the outer protection tube 13 and the heater 15 and between the heater 15 and the fiber bundle protection tube 16 to form a sheath heater. As a result, the heat efficiency of the heater 15 is improved and therefore the electricity consumption can be decreased.

In the light guide 31 the space between the outer protection tube 13 and the optical fiber bundle 32 is filled with an inorganic material to form a sheath heater. As a result, heat efficiency of the heat wires 42 is enhanced and therefore the electricity consumption can be decreased.

(2) In the light guide 31 the optical fibers 41 and the heat wires 42 are not bundled together, but only the optical fibers 41 are bundled, while each of the heat wires 42 is knitted to form a net of wire, which covers the bundle of the optical fibers 41.

(3) In the light guides 11 and 31 both lead wires 14a and 14b are not pulled out together from the side of the fixer 12a, but the lead wire 14a is pulled out from the side of the fixer 12a and the lead wire 14b is pulled out from the side of the fixer 12b. Specifically, the form of pulling out of the lead wires 14a and 14b may be altered in any way.

(4) In the light guides 11 and 31 each of the fixers 12a and 12b is made of a conductive material and each of the lead wires 14a and 14b is connected to each of the fixers 12a and 12b, respectively. By such a way, each of the fixers 12a and 12b can be used as a terminal for conducting an electric current to the heater 15 or the heat wires 42. In addition, since the lead wires 14a and 14b do not protrude from the light guide 11 or 31, the light guide 11 or 31 can be made totally compact.

(5) In the light guide 11 the heat body 22 may be made of a PTC ( Positive Temperature Coefficient material ).

Also, in the light guide 31 the heat wires 42 may be made of a PTC.

The PTC is a heat-sensitive resistance element with a positive coefficient of resistance vs. temperature, whose resistance value increases when it reaches a certain temperature ( Curie point). Therefore, when a PTC having been heated with applied voltage is cooled, the current in the PTC increases, with its temperature being kept at nearly a constant temperature.

That is, the PTC has both functions of a heat body and a temperature regulating element. Therefore, when the heat body 22 or the heat wire 42 is made of a PTC, it becomes possible for the heat body 22 or the heat wire 42 to be controlled at a predetermined temperature, with a result that aforementioned electric current regulator can be omitted and therefore the total system can be simplified, with reduction of manufacturing cost.

(6) In the light guide 11 the space between the optical fiber bundle 17 and the fiber bundle protecting tube 16 is filled with hydrogen gas.

Also, in the light guide 31 the space between the optical fiber bundle 32 and the outer protection tube 13 is filled with hydrogen gas.

By the methods, hydroxyl group content may become higher in silica glass of optical fibers constituting the optical fiber bundle 32 and more structurally stable silica glass is occasionally obtained. In this instance, UV resistance is further improved. Since the wave length of UV absorption edge is occasionally lengthened due to increase of hydroxyl group content in silica glass, the hydroxyl group content should be adjusted so as to transmit UV of the used wave length.

(7) The present invention is not limited to light guides but can be applied, for example, to various apparatus like optical cables for communication in which optical fibers are used. Especially when the invention is applied to such optical cables, since UV of short wave length can be transmitted with small transmission loss ( optical loss ), they can be used for data communication where the quantity of data transfer is large.

## Claims

1. An optical fiber apparatus comprising: optical fibers (41) made of silica glass; and heating means (15, 42) for heating said optical fibers (41), said optical fibers (41) forming an optical fiber bundle (17, 32) and said heating means (15, 42) being applied to said optical fiber bundle (17, 32).

2. An optical fiber apparatus according to claim 1, further comprising control means for controlling said heating means (15, 42) to heat said optical fiber bundle (17, 32) to a predetermined temperature.

3. An optical fiber apparatus according to claim 1, wherein said heating means is provided with a heat body (22) which covers the outer periphery of said optical fiber bundle (17).

4. An optical fiber apparatus according to claim 1, wherein said heating means (42) is provided with heat wires made of a heat body which are arranged in parallel with said optical fibers (41) of said fiber bundle (32)

5. An optical fiber apparatus according to claim 1, wherein said control means controls heating means (15, 42) to heat said optical fibers (41) when light is transmitted in said optical fibers (41).

6. An optical fiber apparatus according to claim 1, wherein said control means controls said heating means (15, 42) to heat said optical fibers (41) when light is not transmitted in said optical fibers (41).

7. A manufacturing method of an optical fiber apparatus resistant to ultraviolet rays and radioactive rays, the method comprising the steps of:
preparing an optical fiber bundle (17);
winding a heat body (22) around an outer surface of the optical fiber bundle (17);
and connecting each lead wire to the heater (15).

8. A manufacturing method of an optical fiber apparatus according to claim 7 further comprising a step of inserting the optical fiber apparatus into a fiber bundle protection tube (16) on which the heater (15) is secured.

9. A manufacturing method of an optical fiber apparatus according to claim 7 further comprising the steps of:
inserting the optical fiber bundle (17) and the fiber bundle protection tube (16) into an outer protection tube (13), and
securing fixers to both ends of the optical fiber bundle.

## Patentansprüche

1. Optische Faservorrichtung mit: optischen Fasern (41) aus Quarzglas; und Heizmitteln (15, 42) zum Erhitzen der optischen Fasern (41), wobei die optischen Fasern (41) ein optisches Faserbündel (17, 32) bilden und die Heizmittel (15, 42) an das optische Faserbündel (17, 32) angelegt werden.

2. Optische Faservorrichtung nach Anspruch 1, welche ausserdem ein Steuerungsmittel aufweist zum Steuern der Heizmittel (15, 42) zum Erhitzen des optischen Faserbündels (17, 32) auf eine vorbestimmte Temperatur.

3. Optische Faservorrichtung nach Anspruch 1, bei welcher das Heizmittel mit einem Heizkörper (22) ausgestattet ist, der den äusseren Rand des optischen Faserbündels (17) abdeckt.

4. Optische Faservorrichtung nach Anspruch 1, bei welcher das Heizmittel (42) mit Heizdrähten als Heizkörper ausgestattet ist, die parallel zu den optischen Fasern (41) des Faserbündels (32) angeordnet sind.

5. Optische Faservorrichtung nach Anspruch 1, bei welcher das Steuerungsmittel Heizmittel (15, 42) steuert, um die optischen Fasern (41) zu erhitzen, wenn in den optischen Fasern (41) Licht übertragen wird.

6. Optische Faservorrichtung nach Anspruch 1, bei welcher das Steuerungsmittel die Heizmittel (15, 42) steuert, um die optischen Fasern (41) zu erhitzen, wenn in den optischen Fasern (41) kein Licht übertragen wird.

7. Herstellungsverfahren für eine optische Faservorrichtung, die gegenüber ultravioletten Strahlen und radioaktiven Strahlen beständig ist, wobei das Verfahren die folgenden Schritte aufweist:
- Vorbereiten eines optischen Faserbündels (17);
- Wickeln eines Heizkörpers (22) um eine äussere Oberfläche des optischen Faserbündels (17) herum; und
- Verbinden jedes Zuführungsdrahts mit der Heizvorrichtung (15) .

8. Herstellungsverfahren für eine optische Faservorrichtung nach Anspruch 7, welches ausserdem einen Schritt aufweist zum Einführen der optischen Faservorrichtung in ein Faserbündel-Schutzrohr (16), auf dem die Heizvorrichtung (15) befestigt ist.

9. Herstellungsverfahren für eine optische Faservorrichtung nach Anspruch 7, welches ausserdem die folgenden Schritte aufweist:
- Einführen des optischen Faserbündels (17) und des Faserbündel-Schutzrohrs (16) in ein äusseres Schutzrohr (13); und
- Befestigen von Befestigungsvorrichtungen an beiden Enden des optischen Faserbündels.

## Revendications

1. Appareil à fibres optiques comprenant : des fibres optiques (41) en verre de silice ; et des moyens chauffants (15, 42) destinés à chauffer les fibres optiques (41), les fibres optiques (41) formant un faisceau de fibres optiques (17, 32) et les moyens chauffants (15, 42) étant appliqués sur le faisceau de fibres optiques (17, 32).

2. Appareil à fibres optiques selon la revendication 1, comprenant, en outre, des moyens de commande pour commander les moyens chauffants (15, 42) afin de chauffer le faisceau de fibres optiques (17, 32) à une température prédéterminée.

3. Appareil à fibres optiques selon la revendication 1, dans lequel les moyens chauffants sont pourvus d'un corps de chauffe (22) qui recouvre la périphérie externe du faisceau de fibres optiques (17).

4. Appareil à fibres optiques selon la revendication 1, dans lequel les moyens chauffants (42) sont pourvus de filaments chauffants constitués en un corps de chauffe, qui sont montés parallèlement aux fibres optiques (41) du faisceau de fibres (32).

5. Appareil à fibres optiques selon la revendication 1, dans lequel les moyens de commande commandent les moyens chauffants (15, 42) pour qu'ils chauffent les fibres optiques (41) lorsque de la lumière est transmise dans les fibres optiques (41).

6. Appareil à fibres optiques selon la revendication 1, dans lequel les moyens de commande commandent les moyens chauffants (15, 42) pour qu'ils chauffent les fibres optiques (41) lorsque de la lumière n'est pas transmise dans les fibres optiques (41).

7. Procédé de fabrication d'un appareil à fibres optiques résistant aux rayons ultraviolets et aux rayons radioactifs, le procédé comprenant les étapes de :
préparation d'un faisceau de fibres optiques (17) ;
enroulement d'un corps de chauffe (22) autour d'une surface externe du faisceau de fibres optiques (17) ;
et de connexion de chaque fil de sortie avec le moyen chauffant (15).

8. Procédé de fabrication d'un appareil à fibres optiques selon la revendication 7 comprenant, en outre, une étape d'insertion de l'appareil à fibres optiques dans un tube de protection (16) du faisceau de fibres sur lequel le moyen chauffant (15) est fixé.

9. Procédé de fabrication d'un appareil à fibres optiques selon la revendication 7 comprenant, en outre, les étapes d' :
insertion du faisceau de fibres optiques (17) et du tube de protection (16) du faisceau de fibres dans un tube de protection externe (13), et de
montage d'éléments de fixation aux deux extrémités du faisceau de fibres optiques.
